Europäisches Patentamt
European Patent Office
Office européen des brevets

(11) Numéro de publication: **0 095 414**
A2

## (12) DEMANDE DE BREVET EUROPEEN

(21) Numéro de dépôt: 83400994.6

(22) Date de dépôt: 17.05.83

(51) Int. Cl.³: **F 24 J 3/02**
G 02 B 3/08, G 01 S 3/78

(30) Priorité: 26.05.82 FR 8209153

(43) Date de publication de la demande:
30.11.83 Bulletin 83/48

(84) Etats contractants désignés:
AT BE CH DE GB IT LI LU NL SE

(71) Demandeur: Giraud, Henri-Alexandre
2 Rue Mistarlet
F-84000 Avignon(FR)

(72) Inventeur: Giraud, Henri-Alexandre
2 Rue Mistarlet
F-84000 Avignon(FR)

(74) Mandataire: Bressand, Georges et al,
c/o CABINET LAVOIX 2 Place d'Estienne d'Orves
F-75441 Paris Cedex 09(FR)

(54) Lentille de Fresnel et ses applications, notamment à un dispositif pour capter l'énergie solaire.

(57) L'invention concerne une lentille de Fresnel en matière plastique moulée.

Elle comprend au moins une série d'éléments ou secteurs radiaux (2, 3), maintenus juxtaposés, côte à côte dans le sens circonférentiel.

Application notamment aux capteurs de l'énergie solaire.

FIG.1

Lentille de Fresnel et ses applications,
notamment à un dispositif pour capter l'énee.-

La présente invention concerne une lentille du type dit de "Fresnel" en matière plastique et son application aux dispositifs pour capter l'énergie solaire.

On utilise dans les optiques de phares de signalisation côtière les lentilles de Fresnel en verre de relativement grande dimension. Ces lentilles ont cependant un prix de revient et un poids tels que l'on ne peut envisager de les utiliser dans des applications appelées à une grande diffusion, par exemple le captage de l'énergie solaire.

On a également réalisé des lentilles de Fresnel moulées en matière plastique, beaucoup plus légères et moins coûteuses, que l'on utilise notamment dans des appareils de projection du type "diascope". Cependant compte tenu des problèmes de moulage et de stabilité dimensionnelle, ces lentilles ont dans la pratique un diamètre limité, inférieur à 400 mm. Une telle dimension peut se révéler insuffisante dans une application telle que le captage de l'énergie solaire.

Le but de cette invention est de proposer une lentille de Fresnel qui, tout en pouvant atteindre des dimensions importantes, soit d'une fabrication aisée et ait un prix de revient faible.

A cet effet, l'invention a pour objet une lentille de Fresnel en matière plastique moulée caractérisée en ce qu' elle comprend au moins une série d'éléments ou secteurs radiaux maintenus juxtaposés côte à côte dans le sens circonférentiel.

Suivant d'autres caractéristiques :
- il est prévu plusieurs couronnes concentriques formées chacune d'éléments ou secteurs radiaux juxtaposés;
- de préférence le nombre d'éléments constituant chaque couronne va en croissant au fur et à mesure que l'on s'éloigne du centre de la lentille;
- la dimension radiale des éléments constituant les diverses couronnes est à peu près la même.

L'invention a également pour objet un capteur solaire, caractérisé en ce qu'il comprend une lentille de Fresnel du type défini ci-dessus montée sur un cadre orientable autour de deux axes perpendiculaires et asservi à la position du soleil de façon à permettre à la lentille de présenter constamment sa face plane en direction du soleil.

L'invention va être décrite plus en détail ci-dessous, en référence aux dessins annexés, donnés uniquement à titre d'exemple et dans lesquels:

la Fig. 1 représente une lentille de Fresnel selon l'invention en vue de dessus;

la Fig. 2 est une vue en coupe de la lentille de Fresnel suivant la ligne 2-2 de la Fig. 1;

les Fig. 3 et 4 représentent respectivement une vue de dessus et une vue de côté de la partie intérieure d'un secteur;

les Fig. 5 et 6 représentent respectivement une vue de dessus et une vue de côté de la partie extérieure d'un secteur;

la Fig. 7 est une vue en perspective du capteur solaire réalisé avec la lentille de Fresnel selon l"invention;

la Fig. 8 est une vue en perspective d'un bloc de détection de la position du soleil utilisée pour délivrer les valeurs de consigne au dispositif de pilotage;

la Fig. 9 est un schéma représentant les dispositifs électroniques de commande des moteurs du dispositif de pilotage; et

la Fig. 10 est une représentation d'un amplificateur de commande.

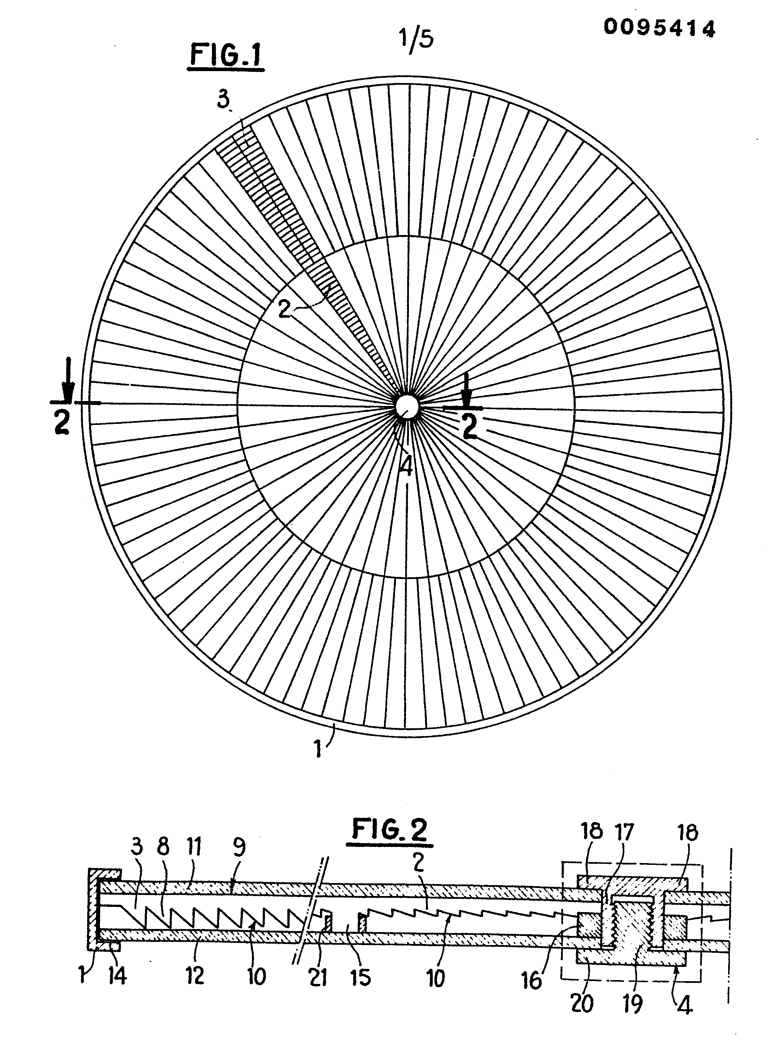

La lentille de Fresnel représentée à la Fig. 1 est constituée d'une couronne 1 à l'intérieur de laquelle sont maintenus juxtaposés un grand nombre d'éléments ou de secteurs 2,3 disposés suivant deux couronnes concentriques autour d'un organe de serrage central 4. Dans l'exemple représenté, il est prévu deux fois plus d'éléments 3 que d'éléments 2 et la dimension radiale de ces éléments 2,3 est à peu près la même, ce qui permet d'utiliser deux types d'éléments ayant, dans l'ensemble des dimensions voisines et pouvant donc être fabriqués par injection sur les mêmes presses.

Il est clair cependant que le nombre et la dimension des secteurs composant chaque couronne peuvent être choisis à volonté en tenant compte de la capacité des équipements de moulage utilisés qui déterminent en particulier le volume maximal de chaque pièce moulée. Si les dimensions radiales des couronnes sont choisies à peu près égales on est amené comme dans l'exemple représenté à augmenter le nombre des éléments composant les couronnes les plus éloignées du centre. Ceci ne constitue pas, cependant, une obligation et deux couronnes adjacentes peuvent comporter le même nombre d'éléments. On peut même envisager, mais ceci est à priori moins favorable qu'une couronne donnée comporte moins d'éléments qu'une couronne située plus près du centre de la lentille.

Comme représenté à la Fig. 2, chaque secteur 2,3 comprend une face supérieure plane 9 et une face inférieure composée d'une succession de prismes reproduisant des échelons optiques connus des lentilles de Fresnel, calculés en fonction du rayon de courbure et de la focale utilisée. Sur la face plane supérieure 9 de l'ensemble des secteurs est appliquée une plaque plane 11 en matière plastique transparente et l'ensemble des secteurs est maintenu entre ladite plaque 11 et une plaque inférieure analogue 12.

La couronne 1 a une section en U à l'intérieur de laquelle sont engagés les bords extérieurs des plaques 11,12 et des secteurs 2,3. Une garniture élastique 14 en caoutchouc ou en mousse est interposée entre les bords extérieurs des plaques et des secteurs et l'intérieur de la couronne. Des plots 15 venus de moulage avec chaque secteur et une entretoise cylindrique 16 entourant la partie interne de l'organe de serrage 4 sont disposés entre la face 10 des secteurs pour assurer l'alignement planimétrique sur la plaque 11 de la face plane 9 de tous les secteurs 2,3. L'élément de serrage 4 comprend une douille filetée 17 délimitant une collerette 18, dans laquelle s'engage une vis 19 comportant une tête plate 20. La collerette 18 et la tête plate 20 sont disposées de façon à maintenir les bords intérieurs des plaques
11,12 et des secteurs 2  pour les serrer les uns contre les
autres par l'intermédiaire de l'entretoise 16.

Chaque secteur 2,3 comprend un demi plot disposé sur
chacun de ses côtés et lors de l'assemblage des secteurs, une
bague 21 est enfilée sur deux demi plots 15 voisins assurant
ainsi l'alignement correct des prismes  ainsi que l'immobilisation des secteurs entre eux.

Deux plans inclinés d'un léger angle $\alpha$ sont prévus
sur le bord extérieur de chaque élément 2 pour lui permettre
d'abouter avec le bord intérieur des éléments 3 adjacents.

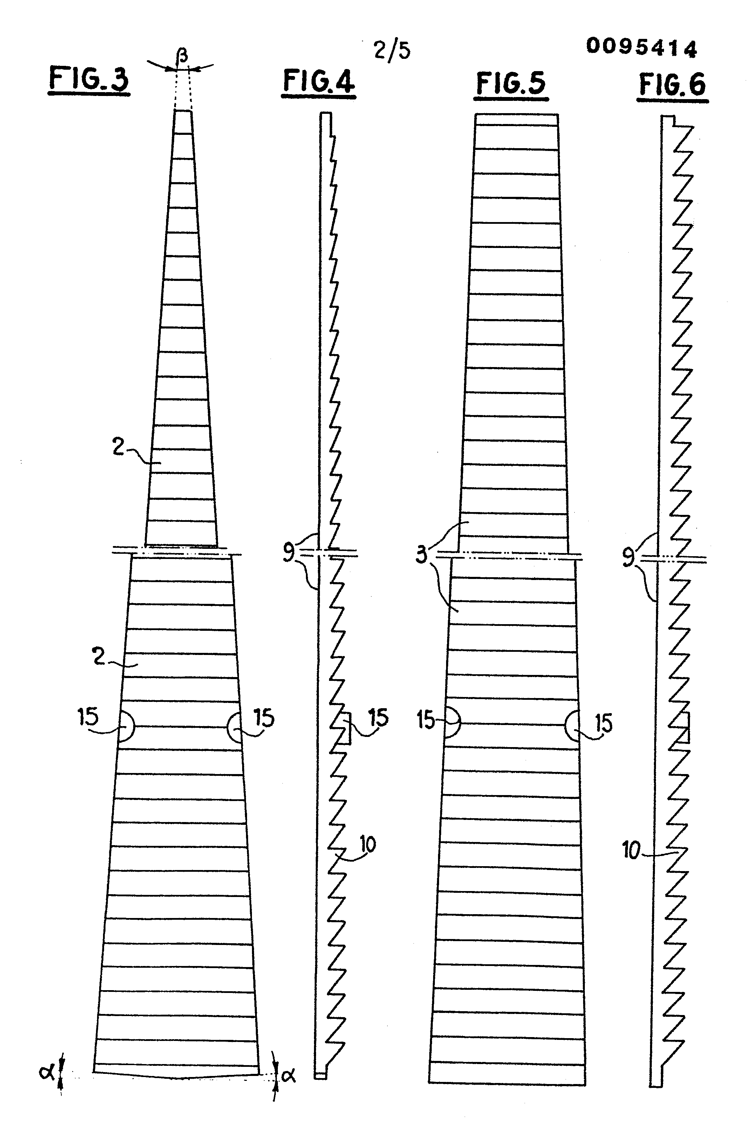

Les secteurs 2,3 qui constituent la lentille peuvent
être obtenus par moulage d'une matière transparente tel qu'
un polycarbonate type DIAKON M 102 (ICI) où par moulage à
chaud d'un monomère. Dans l'exemple de réalisation de l'invention on a donné une forme rectiligne aux arêtes des prismes 10 des secteurs, comme cela est représenté aux Fig. 3 à
6. Il est bien évident que cette forme n'est pas obligatoire
et pourrait être notamment circulaire.

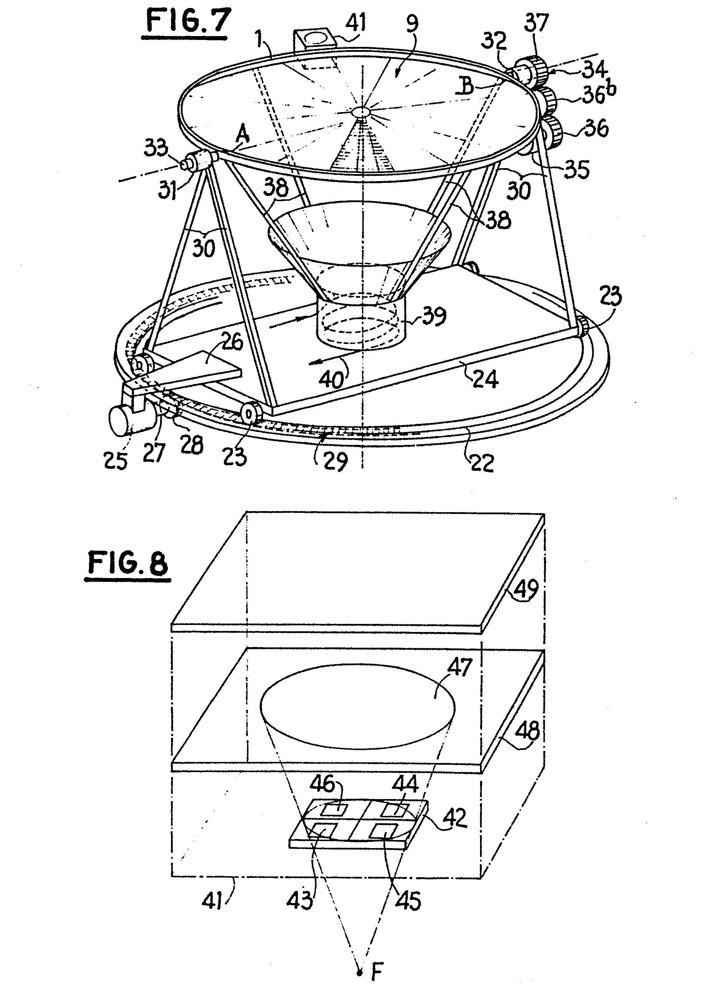

Un capteur solaire équipé d'une lentille de Fresnel
selon l'invention, de deux mètres de diamètre est représenté
à la Fig. 7.

Il comprend un chemin de roulement circulaire 22 sur
lequel roulent les galets 23 d'un plateau 24, supportant un
moteur 25 par l'intermédiaire d'un bras 26. L'arbre 27 du moteur 25 entraîne en rotation une roue dentée 28 qui engrène
sur une crémaillère 29 située sous le chemin de roulement 22.
Des montants 30 fixés par une de leurs extrémités sur le plateau 24, comportent à leur partie supérieure deux paliers 31
et 32 dans lesquels tourillonnent deux axes 33 et 34 fixés
sur la périphérie extérieure de la couronne 1 de la lentille
de Fresnel en des points diamétralement opposés. Un moteur
35, fixé sur les montants 30, entraîne l'arbre 34 par l'intermédiaire des pignons 36, 36b et 37. Des tiges obliques
38 ont une de leur extrémité fixée à la couronne 1, pour supporter à leur autre extrémité et à la hauteur du foyer de la lentille, un bloc 39, de préférence en acier contenant un serpentin 40 à l'intérieur duquel circule un liquide, formé par exemple d'un mélange d'eau et de glycol. Ce liquide est destiné à transporter l'énergie calorifique captée, vers le circuit d'utilisation ou un dispositif accumulateur. La lentille est disposée de façon à être entraînée par le moteur 35 autour d'un axe perpendiculaire à l'axe de rotation de son support pour pouvoir présenter constamment sa face 9 en direction du soleil.

Un bloc de détection 41 de la position du soleil par rapport à la surface de la lentille est également fixé sur l'extérieur de la couronne 1. Ce bloc représenté à la Fig. 8 comprend un ensemble de quatre diodes photo-résistantes disposées en carré et appariées en diagonale. Cet ensemble peut être réalisé à partir d'un même substrat 42 de semi-conducteur de conductibilité P sur lequel sont diffusées quatre pastilles 43 à 46 de semi-conducteur de conductibilité N. Le centre du carré est situé sur l'axe optique d'une lentille convergente 47 à une distance du centre de cette lentille inférieure à sa distance focale, de façon qu'un flux de rayons solaires convergeant au foyer de la lentille embrasse un élément de surface identique de chacune des quatre pastilles.

La lentille 47 repose sur un support 48. L'ensemble des quatre diodes est orienté de façon qu'une diagonale du carré soit parallèle à l'axe 33,34. Il en résulte qu'une modification d'éclairement due au déplacement du soleil se traduit par un déséquilibre des surfaces de pastille éclairées entraînant une modification du signal de sortie des diodes photo-résistantes, se traduisant par l'apparition d'une tension aux bornes des diodes situées sur une même diagonale.

Un filtre 49 laissant passer les infra-rouges est placé au-dessus du bloc de détection 41, sur la face située entre le soleil et la face avant de la lentille de façon à rendre opérationnel le capteur solaire même en présence d'une couche nuageuse.

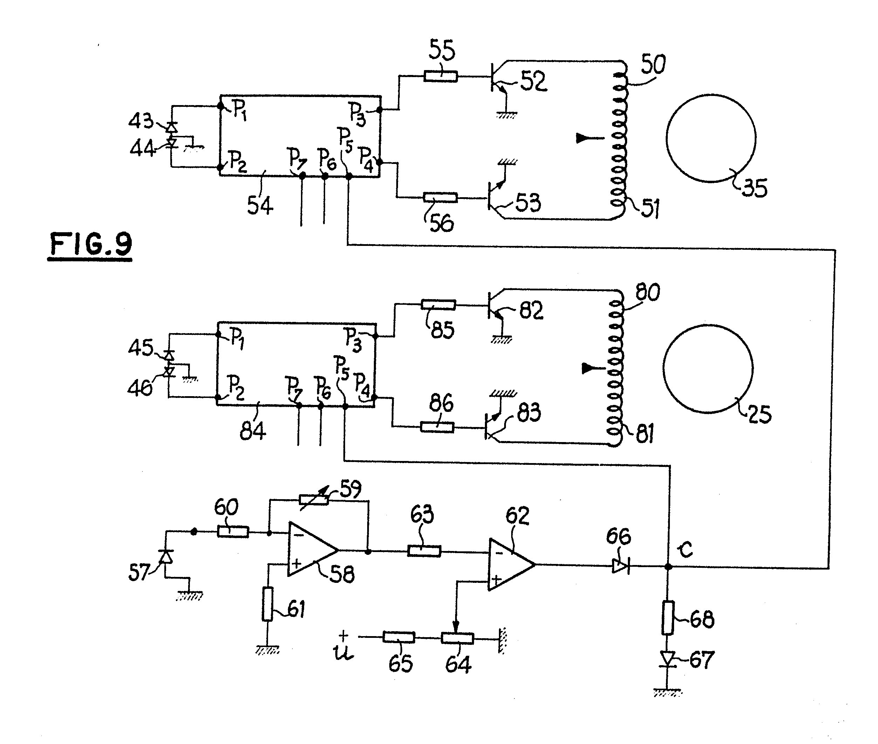

Les dispositifs électroniques de commande des moteurs sont représentés à la Fig. 9.

Le moteur à courant continu 35 qui assure le déplacement en site de la couronne de la lentille par basculement autour de ses axes 33 et 34, est commandé sur ses enroulements d'induit 50 et 51 par les collecteurs respectifs des transistors 52 et 53 dont les bases sont reliées aux sorties respectives $P_3$ et $P_4$ d'un amplificateur d'asservissement 54 par l'intermédiaire des résistances 55 et 56. Les diodes photo-résistantes 43 et 44 ont leur anode connectée ensemble à la masse et leur cathode reliée respectivement aux entrées $P_1$ et $P_2$ de l'amplificateur 54. Le moteur 25 à courant continu assure le déplacement en azimut du plateau 24 autour de l'axe vertical du chemin de roulement 22, il est commandé sur ses enroulements d'induit 80 et 81 par des dispositifs électroniques identiques à ceux décrits précédemment pour la commande du moteur 35, qui portent sur la Fig. 9, les références des dispositifs précédents augmentées de 30. On notera que les moteurs à courant continu 25 et 35 peuvent être remplacés par des moteurs à courant alternatif, auquel cas on interpose des relais entre les enroulements de commande des moteurs et les amplificateurs 54 et 84.

L'amplificateur 84 et les photo-résistances 45 et 46 sont reliés de façon similaire aux liaisons existantes entre les photo-résistances 43 et 44 et l'amplificateur 54. La borne $P_5$ des amplificateurs 54 et 84 constitue une entrée de validation du dispositif électronique de commande qui est activée lorsque le rayonnement du soleil a une intensité suffisante. Cette intensité de rayonnement se traduit par l'apparition d'une tension électrique négative aux bornes de la diode 57. Cette tension est amplifiée par un amplificateur opérationnel 58 dans le rapport de ses résistances d'amplification 59 et 60. Cet amplificateur a son entrée (+) reliée à la masse générale au travers d'une résistance 61. La tension délivrée ainsi en sortie de l'amplificateur 58 est positive et est appliquée sur l'entrée(-) d'un amplificateur opérationnel 62 au travers d'une résistance 63, monté  en comparateur de tension. Cette tension est comparée à un niveau fixe de tension appliqué sur l'entrée (+) de l'amplificateur
62, défini par le diviseur potentiométrique formé de la résistance variable 64 et de la résistance fixe 65 montées en
série entre le pôle positif de l'alimentation, non représentée, du dispositif et la masse. Ce niveau de tension définit
le seuil de rayonnement toléré. En-dessous de ce niveau, la
tension de sortie du comparateur est positive et inhibe l'entrée $P_5$ et par là le fonctionnement des amplificateurs d'asservissement, au-dessus elle valide leur fonctionnement. Les
entrées $P_6$ et $P_7$ des amplificateurs 54 et 84 sont utilisées
pour introduire des tensions positives ou négatives de commande manuelle des déplacements en site et en azimut de la
couronne de la lentille pour la pointer sur le soleil au moment de la mise en marche du capteur solaire, ou par un système photo-électrique type "LUMANDER " pour retour au point
zéro le soir, soit encore par un signal d'une sonde thermique
de protection en cas de surchauffe à la suite d'une panne de
circulation de fluide calo-porteur.

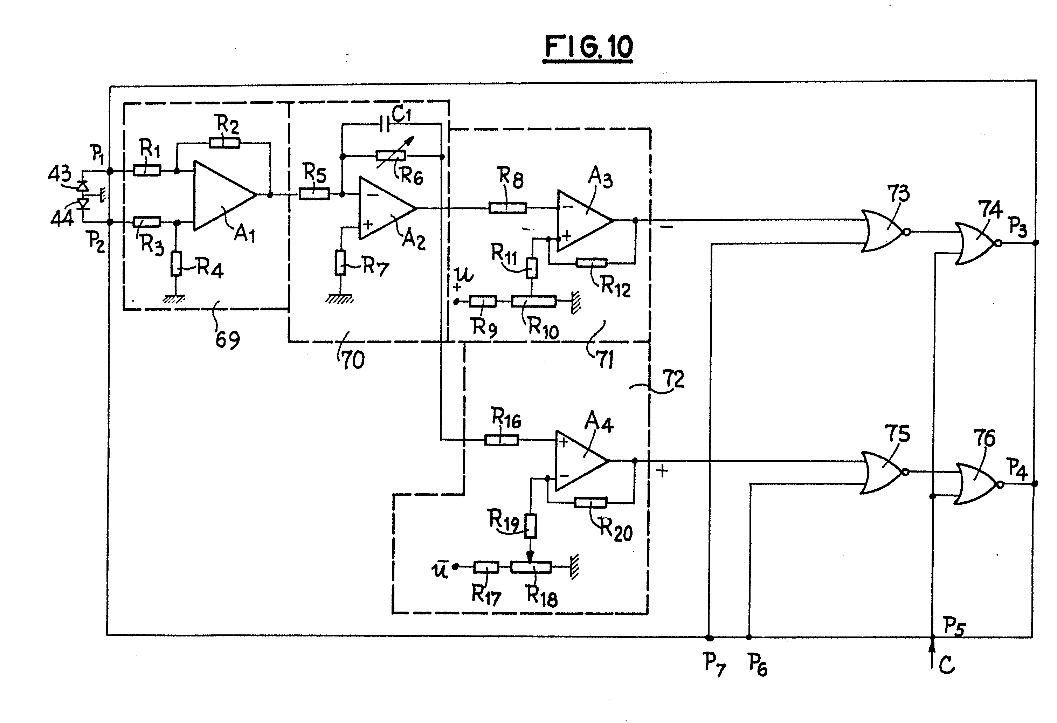

La Fig. 10 représente un amplificateur d'asservissement.

Il comprend un amplificateur différentiel 69 sur les
entrées duquel sont appliquées les tensions délivrées par
les diodes photo-résistantes 43 et 44, un réseau correcteur
de phase 70 connecté par son entrée à la sortie de l'amplificateur 69 et connecté par sa sortie aux entrées respectives de deux étages comparateurs 71 et 72, un circuit "NON
OU" 73 dont une entrée est reliée à la sortie du comparateur 71 et dont l'autre entrée est connectée à l'entrée $P_7$
de l'amplificateur, un circuit "NON OU" 74 dont une entrée
est reliée à la sortie du circuit "NON OU" 73, un circuit
"NON OU" 75 dont une entrée est reliée à la sortie du comparateur 72 et dont l'autre entrée est reliée à l'entrée $P_6$ de
l'amplificateur, et un circuit "NON OU" 76 dont une entrée
est reliée à la sortie du circuit "NON OU" 75. Les circuits "NON OU" 74 et 76 sont connectés par une deuxième entrée à l'entrée $P_5$ de l'amplificateur.

L'amplificateur différentiel 69 se compose d'un amplificateur opérationnel $A_1$ connecté sur son entrée (-) d'une part à une extrémité d'une résistance $R_1$ dont l'autre extrémité est connectée à la cathode de la diode 43 et d'autre part à une extrémité d'une résistance $R_2$ dont l'autre extrémité est connectée à la sortie de l'amplificateur $A_1$. L'amplificateur $A_1$ est également connecté sur son entrée (+) d'une part à une extrémité d'une résistance $R_3$ dont l'autre extrémité est connectée à la cathode de la diode 44 et d'autre part à une extrémité d'une résistance $R_4$ dont l'autre extrémité est à la masse.

Le réseau correcteur de phase 70 se compose d'un amplificateur opérationnel $A_2$ connecté sur son entrée (-) d'une part à une extrémité d'une résistance $R_5$ dont l'autre extrémité est connectée à la sortie de l'amplificateur $A_1$ et d'autre part à une extrémité d'une résistance $R_6$ dont l'autre extrémité est connectée à la sortie de l'amplificateur $A_2$. Une capacité $C_1$ est branchée en parallèle sur les extrémités de la résistance $R_6$. La résistance $R_6$ est réglable pour ajuster le pôle $R_6 C_1$ de la fonction de transfert du réseau 70. L'amplificateur $A_2$ est connecté sur son entrée (+) à une extrémité d'une résistance $R_7$ dont l'autre extrémité est reliée à la masse générale du circuit.

Le comparateur 71 comprend un amplificateur opérationnel $A_3$ relié sur son entrée (-) à la sortie de l'amplificateur $A_2$ par l'intermédiaire d'une résistance $R_8$. L'entrée (+) de l'amplificateur $A_3$ est connectée d'une part à une extrémité d'une résistance $R_{12}$ dont l'autre extrémité est connectée à la sortie de l'amplificateur $A_3$ et d'autre part à une extrémité d'une résistance $R_{11}$ dont l'autre extrémité est reliée au curseur d'une résistance réglable $R_{10}$. La résistance $R_{10}$ est reliée par une de ses extrémités à la masse générale et par son autre extrémité au pôle +U d'une tension de référence au travers d'une résistance $R_9$.

Le comparateur 72 comporte les mêmes éléments que le comparateur 71, leur référence est obtenue en ajoutant 8 aux références des éléments du comparateur 71.

Le fonctionnement de l'amplificateur est le suivant.

L'amplificateur différentiel 69 amplifie dans le rapport des résistances $R_2/R_1$, la différence des tensions fournies par les diodes 43 et 44.

Si l'éclairement détecté par les diodes 43 et 44 est le même, la différence de tension obtenue est nulle et l'amplificateur 69 délivre sur sa sortie une tension nulle. Par contre, s'il y a une différence d'éclairement correspondant à un dépointage de la lentille sur le soleil, cette différence est amplifiée par l'amplificateur 69 qui délivre une tension positive ou négative suivant le sens de cette différence. La sortie de l'amplificateur 69 est positive si la diode 43 est éclairée davantage que la diode 44, elle est négative dans le cas contraire. La tension de sortie de l'amplificateur 69 est appliquée à l'entrée du réseau 70 à retard de phase.

La tension de sortie du réseau 70 est appliquée aux entrées respectives des comparateurs 71 et 72. Si cette tension est nulle, les tensions de sortie des deux comparateurs 71 et 72 sont toutes deux positives. Si la tension de sortie du réseau 70 est positive et supérieure en valeur absolue à la valeur du seuil définie par le diviseur potentiomètrique formé par les résistances $R_9$ et $R_{10}$, la tension de sortie du comparateur 71 devient négative alors que la tension de sortie du comparateur 72 reste positive. De même si la tension de sortie du réseau 70 devient négative et supérieure en valeur absolue à la valeur du seuil défini par le diviseur potentiomètrique formé par les résistances $R_{17}$ et $R_{18}$, la tension de sortie du comparateur 72 devient négative alors qu'elle est positive en sortie du comparateur 71. Cette tension négative qui apparaît en sortie de l'un ou l'autre des comparateurs 71 ou 72 a pour conséquence la commande d'un moteur 35 ou 25 au travers des circuits 73 à 76 dans un sens ou dans l'autre pour faire diminuer l'écart d'éclairement des couples de diodes 43,44 et 45,46.

# R E V E N D I C A T I O N S

1) Lentille de Fresnel en matière plastique moulée, caractérisée en ce qu'elle comprend au moins une série d'éléments ou secteurs radiaux (2,3) maintenus juxtaposés côté à côte dans le sens circonférentiel.

2) Lentille de Fresnel suivant la revendication 1 caractérisée en ce qu'il est prévu plusieurs couronnes concentriques formées chacunes d'éléments ou secteurs radiaux (2,3) juxtaposés.

3) Lentille de Fresnel suivant la revendication 2 caractérisée en ce que de préférence le nombre d'éléments constituant chaque couronne va en croissant au fur et à mesure que l'on s'éloigne du centre de la lentille.

4) Lentille de Fresnel suivant la revendication 2 caractérisée en ce que la dimension radiale des éléments constituant les diverses couronnes est à peu près la même.

5) Lentille suivant l'une quelconque des revendications 1 à 4, caractérisée en ce que les éléments sont munis de moyens de positionnement relatif (15).

6) Lentille suivant la revendication 5, caractérisée en ce que les moyens de positionnement comprennent des demi-plots (15) prévus sur chaque côté de chaque élément et des bagues (21) adaptées pour coiffer deux demi-plots adjacents.

7) Lentille selon l'une quelconque des revendications 1 à 6, comportant une face plane et une face délimitant des prismes, caractérisée en ce que la face plane de tous les secteurs est appliquée sur une plaque plane transparente (11).

8) Lentille selon la revendication 7, caractérisée en ce que l'ensemble des secteurs est maintenu entre ladite plaque (11) et une autre plaque analogue (12).

9) Lentille selon la revendication 8, caracté-

**0095414**

risée en ce qu'il est prévu des moyens d'entretoisement (15,16) entre les deux plaques et des moyens de serrage des plaques l'une vers l'autre.

10) Lentille suivant la revendication 9, caractérisée en ce que les moyens de serrage comprennent d'une part un organe de serrage central (3) et d'autre part une couronne de maintien périphérique (1).

11) Capteur solaire, caractérisé en ce qu'il comprend une lentille de Fresnel selon l'une quelconque des revendications 1 à 10, montée sur un cadre orientable (1) autour de deux axes perpendiculaires et dont la position est asservie à la position du soleil par des moyens de détection et de commande convenables.

12) Capteur solaire selon la revendication 11, caractérisé en ce que les mouvements du cadre sont commandés par deux moteurs (25, 35) reliés à un bloc de détection (41) de la position du soleil.

13) Capteur solaire selon la revendication 12, caractérisé en ce que les moyens de commande de chaque moteur comprennent un amplificateur (54,84) dont les sorties sont reliées aux enroulements (50, 51 ; 52, 53) de commande du moteur et dont les entrées sont reliées aux sorties du bloc de détection (41), ledit bloc de détection (41) étant solidaire de la couronne de maintien (1) périphérique de la lentille de Fresnel, et lesdits moteurs de chaque axe réagissant aux signaux délivrés par les sorties de leur amplificateur respectif pour annuler l'écart formé entre l'axe normal de la lentille et la position réelle du soleil.

14) Capteur solaire selon la revendication 13, caractérisé en ce que le bloc de détection (41) comprend au moins un ensemble de quatre pastilles ou diodes photorésistantes disposées en carré et appariées en diagonale, le centre du carré étant situé sur l'axe optique d'une lentille convergente (47) à une distance du centre de cette lentille inférieure à sa distance focale et le plan formé par les quatre diodes sur leur substrat (42) étant perpendiculaire audit axe optique de la lentille, de façon qu'un flux convergent de rayons du soleil au foyer de la lentille embrasse un élément de surface identique de chacune des quatre pastilles.

15) Capteur solaire selon la revendication 14, caractérisé en ce que le bloc de détection (41) comprend un filtre (49) laissant passer les infrarouges.

16) Capteur solaire selon l'une quelconque des revendications 14 et 15, caractérisé en ce que chaque amplificateur comprend un amplificateur différentiel (69) dont les entrées sont reliées à une paire de premières et deuxième diodes photorésistantes, appariées dans une diagonale dudit carré et dont la sortie est reliée à l'entrée d'un réseau correcteur (70) dont la sortie est reliée aux entrées de deux comparateurs (71,72) qui délivrent un signal de commande en rotation du moteur correspondant dans un premier sens lorsque l'éclairement de la première diode est supérieur à celui de la deuxième en dehors d'un seuil prédéterminé, et dans un deuxième sens lorsque l'éclairement de la deuxième diode est supérieur à celui de la première diode en dehors d'un seuil prédéterminé.

FIG.1

FIG.2

0095414

1/5

FIG.3   FIG.4   FIG.5   FIG.6

## FIG.7

## FIG.8

**FIG.9**

FIG.10